# EUROPÄISCHE PATENTSCHRIFT

(11) **EP 4 035 145 B1**
(45) Veröffentlichungstag und Bekanntmachung des Hinweises auf die Patenterteilung: **04.10.2023**
(21) Anmeldenummer: 20771900.6
(22) Anmeldetag: 21.09.2020
(51) Int. Cl.: G09F 13/08, B32B 27/00

(54) **DURCHLEUCHTBARE METALLISIERTE DESIGNFLÄCHE**
TRANSILLUMINABLE METALLIZED DESIGN SURFACE
SURFACE DE CONCEPTION MÉTALLISÉE TRANSPARENTE

(30) Priorität: 26.09.2019 EP 19199732
(43) Veröffentlichungstag der Anmeldung: 03.08.2022
(73) Patentinhaber: Covestro Intellectual Property GmbH & Co. KG, 51373 Leverkusen (DE)
(72) Erfinder: GRIMM, Thomas, 50765 Köln (DE); HAGEN, Rainer, 51377 Leverkusen (DE); GROSSER, Ulrich, 51515 Kürten (DE)
(74) Vertreter: Levpat
(86) Internationale Anmeldenummer: PCT/EP2020/076241
(87) Internationale Veröffentlichungsnummer: WO 2021/058420

(56) Entgegenhaltungen:
- EP-A2- 1 932 726
- WO-A1-2018/154762

## Beschreibung

Die Erfindung betrifft eine Kombination aus einem dekorativen Mehrschichtkörper und einer Lichtquelle, welche Informationen transportiert. Die Erfindung betrifft außerdem die Verwendung eines solchen Elementes.

Auf thermoplastischem Material basierende Karosserieteile bieten für den Einsatz in Fahrzeugen wesentliche Vorteile gegenüber Karosserieteilen aus anderen Materialien, wie z.B. Glas oder Metall. Hierzu zählen z.B. erhöhte Schlagzähigkeit, hohe Bruchsicherheit und/oder Gewichtsersparnis, die im Fall von Automobilen eine höhere Insassensicherheit bei Verkehrsunfällen und einen niedrigeren Kraftstoffverbrauch ermöglichen. Schließlich lassen thermoplastische Werkstoffe aufgrund ihrer einfacheren Formbarkeit eine wesentlich größere gestalterische Freiheit für Karosserieanbauteile zu. Letzteres gewinnt durch jüngste Entwicklungen auf dem Gebiet der teil- und vollelektrischen Antriebe zunehmend an Bedeutung, weil Kraftfahrzeuge aerodynamischer gestaltet und ihr Design von herkömmlichen Verbrennerfahrzeugen deutlicher abgegrenzt werden können. Ein bekanntes Beispiel für neues, aerodynamisches Design ist der Frontgrill bestehend aus einem flächig geschlossenen thermoplastischen Formteil. Ferner sind transparente, transparent eingefärbte und transluzente thermoplastische Polymere geeignet, um Anbauteile wie z.B. Scheinwerfer oder Frontgrills mit Lichtfunktionen auszustatten. Angestoßen durch Entwicklungen für die Personalisierung von Fahrzeugen und für das hoch automatisierte und autonome Fahren werden mehr und neue Varianten von Signalleuchten und Dekorleuchten, die die Kommunikation des Fahrzeugs mit seiner Umgebung ("Car-to-X") auf ein höheres Niveau bringen, gefordert.

Insofern ist es eine technische Aufgabe, Anzeigefunktionen, Lichtfunktionen und Lichtdesigns in aerodynamisch geschlossene, dekorative thermoplastische Formteile zu integrieren.

Im Stand der Technik ist der geschlossene Frontgrill eines Fahrzeugs mit integriertem elektronischem Display vorbeschrieben. Die in der DE 102010008334 A1 beschriebene Lösung weist den Vorteil auf, dass das elektronische Display hinter einer geschlossenen Abdeckscheibe sitzt und dabei sowohl dekorative, als auch informative Aufgaben übernehmen kann. Das beschriebene Display weist eine primäre Lichtquelle mit Lichtleiterplatte auf, die sowohl das Display-Panel beleuchtet, als auch Licht zur Hervorhebung eines zentral im Grill positionierten Firmenlogos zur Verfügung stellt. Lichtfarbe und Lichtintensität für das Dekorlicht können elektronisch geregelt werden. Technische Lösungen dieser Art haben den großen Nachteil, dass die durch das Display reservierte Karosseriefläche nicht mehr für echte, d.h. nicht digital dargestellte Dekorelemente zur Verfügung steht. Eine elektronische Display-Anzeige kann nämlich das durch natürliches Umgebungslicht erzeugte dynamische Erscheinungsbild eines Dekors nur unzureichend simulieren. Der Unterschied zwischen natürlich wechselnden Licht-, Schatten- und Farbspielen eines Dekors und elektronisch erzeugten Bildern ist immer auffällig und kann als störend empfunden werden, insbesondere dann, wenn das elektronisch erzeugte Bild Räumlichkeit oder metallisch spiegelnde Flächen simulieren soll. Ein weiterer Nachteil ist, dass elektronische Displays immer elektrische Energie verbrauchen. Der Dauerbetrieb eines Displays, nur um eine dekorative Aufgabe zu erfüllen, ist daher energietechnisch ungünstig.

Aus dem Stand der Technik lässt sich keine Vorschrift ableiten, wie ein solches Bauteil beschaffen sein müsste. Die DE 10337456 A1 beschreibt Aufdampf- und Sputter-Verfahren zur Herstellung von Metallbeschichtungen. Aus der DE 102005006459 A1 ist ein mittels eines solchen Verfahrens hergestelltes metallisiertes Kunststoffbauteil mit Anzeigeelement bekannt, das eine erste haftvermittelnde Schicht aufweist, die mit einer Metallbeschichtung versehen ist. Die an sich opake Metallbeschichtung wird partiell mittels Laser entfernt, so dass eine Hinterleuchtung möglich wird. Ein solches System geht jedoch nicht über ein beleuchtetes Dekorelement hinaus. Die verbliebenen opaken Anteile der Metallbeschichtung würden bei einer flächigen Rückprojektion wie dunkle Fehlstellen in der Informationsanzeige wirken. Eine Anzeige variabler Informationen ohne Bildstörung ist daher nicht möglich.

Die WO 2008/034610 A1 zeigt auf, dass ausreichend dünne aufgedampfte oder gesputterte Metallschichten teildurchlässig für LED-Licht sind, so dass in Verbindung mit einer hinter der Metallschicht liegenden opaken Lackschicht Symbole aufleuchten können, wenn die Hinterleuchtung aktiviert ist, und die Symbole durch den metallischen Glanz unsichtbar sind, wenn die Hinterleuchtung deaktiviert ist. Als Verfahren zur Herstellung des Anzeigeelements sind Mehrkomponenten-Spritzgussverfahrens oder Hinterspritzen einer opaken Folie in einem gemeinsamen Arbeitsschritt genannt. Dieses Bauteil ist aber nur als LED-Symbolanzeige mit "An/Aus"-Schaltschema, nicht als Wechselanzeige mit variablem Bildinhalt und variablen Farben zu verwenden. EP 1 932 726 A2 offenbart in Fig. 14, Ausführungsform 10 eine Leuchteinheit, umfassend die folgenden Elemente in dieser Reihenfolge: - eine transparente, thermoplastische Schicht (1), wobei die transparente Schicht aus Polycarbonat oder Acrylat bestehen kann (siehe Abschnitt [0010]) und eine 3-dimensional strukturierte Oberfläche auf der der Sichtseite abgewandten Seite (1a) aufweist (Aussparungen (2)), - eine halbdurchlässige Metallschicht (4) auf der transparenten Schicht (300) auf der der Sichtseite abgewandten Seite, - eine Diffusorschicht (15), welche einen Abstand von ≤ 5 mm zur Metallschicht aufweist, - eine Lichtquelle (5), welche Informationen transportiert und einen Abstand zur Diffusorschicht von < 80 cm aufweist. EP 1 932 726 A2 offenbart keine halbdurchlässige Metallschicht (Transmission > 4%) direkt auf der transparenten Schicht auf der der Sichtseite abgewandten Seite. Zudem sind keine Transmissionswerte explizit angegeben.

Die vorliegende Erfindung hat sich die Aufgabe gestellt, ein flächig ausgestaltetes thermoplastisches Formteil mit einer dekorativen Struktur bereitzustellen, das geeignet ist für die Verwendung als dekoratives Karosseriebauteil eines Fahrzeugs und zugleich als - möglichst farbige- Wechselanzeige. Insbesondere soll so viel Fläche wie möglich, d.h. über die topografisch ausgestalteten Dekorelemente hinweg, als deutlich konturierter Bildschirm genutzt werden können. Dem Sicherheitsaspekt eines automobilen Außendisplays, dessen Bild- bzw. Videoinformation über ein breites Sichtfeld kontrastreich und fehlerfrei zu erkennen sein sollte, sollte dabei Rechnung getragen werden.

Überraschend hat sich gezeigt, dass durch eine Leuchteinheit gemäß Anspruch 1 trotz der Dekoroberfläche mit Struktur über das Licht exakt konturierte Informationen transportiert werden können und die vorbeschriebene Aufgabe gelöst wird.

Eine Leuchteinheit im erfindungsgemäßen Sinn umfasst die folgenden Elemente in dieser Reihenfolge:
- eine transparente, thermoplastische Schicht mit einer Sichtseite und einer der Sichtseite abgewandten Seite,
   wobei
   die transparente Schicht eine Transmission Ty von ≥ 10 %, bestimmt nach DIN ISO 13468-2:2006 (D65, 10°), aufweist und
   eine 3-dimensional strukturierte Oberfläche auf der der Sichtseite abgewandten Seite aufweist,
- eine Metallschicht direkt auf der transparenten Schicht auf der der Sichtseite abgewandten Seite, wobei die Metallschicht eine Transmission Ty von ≥ 4%, bestimmt nach DIN ISO 13468-2:2006 (D65, 10°), aufweist,
   wobei die gemeinsame Transmission Ty der Metallschicht mit der transparenten Schicht, bestimmt nach DIN ISO 13468-2:2006 (D65, 10°), mindestens 3,0 % beträgt,
- eine Diffusorschicht, welche einen Abstand von ≤ 5 mm zur Metallschicht aufweist und eine Transmission Ty von mindestens > 50 %, bestimmt nach DIN ISO 13468-2:2006 (D65, 10°), sowie einen Halbwertswinkel von 0° < x < 70°, bestimmt nach DIN 5036: 1978 (bezogen auf die Lichtintensität), aufweist,
- eine Lichtquelle, welche Informationen transportiert und einen Abstand zur Diffusorschicht von < 80 cm, bevorzugt < 50, besonders bevorzugt < 15 cm, ganz besonders bevorzugt < 5 cm aufweist.

Die einzelnen Elemente einer erfindungsgemäßen Leuchteinheit sind nachfolgend näher beschrieben.

Die Leuchteinheit umfasst eine transparente Schicht mit einer Sichtseite und einer der Sichtseite gegenüberliegenden Seite. Transparent im Sinne der vorliegenden Erfindung bedeutet, dass die Schicht eine Lichttransmission Ty von ≥ 10 %, bevorzugt ≥ 50%, weiter bevorzugt ≥ 65 %, noch weiter bevorzugt von ≥ 65 %, besonders bevorzugt bis 75 %, bestimmt nach DIN ISO 13468-2:2006 (D65, 10°), aufweist. Die Transmission bezieht sich auf die jeweilige Schicht in ihrer jeweiligen Dicke. Hat die Schicht z.B. eine Dicke von 2 mm, ist der Wert der Transmission auf die Schicht der Dicke von 2 mm zu lesen. Erfindungsgemäß ist die Trübung der transparenten Schicht vorzugsweise kleiner als 5%, weiter bevorzugt kleiner als 3%, und besonders bevorzugt kleiner als 2,0%, bestimmt nach ASTM D1003:2013. Die transparente Schicht ist vorzugsweise auf der Sichtseite der Leuchteinheit, also der der künstlichen Lichtquelle abgewandten Seite, glatt. "Glatt" bedeutet hierfür im erfindungsgemäßen Sinne der Vorliegen einer Hochglanzoberfläche. Die maximale Rauigkeit einer solchen Oberfläche Ra beträgt bevorzugt < 0,1 µm, besonders bevorzugt < 0,05 µm, ganz besonders bevorzugt unter 0,025 µm, bestimmt nach DIN EN ISO 1302:2002-06. Die der Sichtseite gegenüberliegenden Seite der transparenten Schicht ist 3-dimensional strukturiert.

Die transparente Schicht besteht aus einem thermoplastischen Material. Das thermoplastische Material basiert bevorzugt auf einem der nachfolgenden Polymere:
aromatischem Polycarbonat (PC), einschließlich Copolycarbonat, Polyestercarbonat, Polystyrol (PS), Styrol-Copolymeren wie z.B. transparentes Polystyrolacrylnitril (PSAN), Polyalkylenen wie Polyethylen (PE) und Polypropylen (PP), aromatischem Polyester wie Polyethylenterephthalat (PET) und Polybutylenterephthalat (PBT), PET-Cyclohexandimethanol-Copolymer (PETG), Polyethylennaphthalat (PEN), Polyacrylat, Copolyacrylat, insbesondere Poly- oder Copolymethylmethacrylaten wie Polymethylmethacrylat (PMMA), Polyimide (z.B. PMMI), Polyethersulfonen, thermoplastischen Polyurethanen, cyclischen Olefinpolymeren oder - copolymeren (COP bzw. COC) oder Mischungen der genannten Komponenten, sofern diese Mischungen transparent sind, bevorzugt auf aromatischem Polycarbonat und/oder Polymethylmethacrylat, besonders bevorzugt auf aromatischem Polycarbonat.

Polycarbonate im Sinn der vorliegenden Erfindung sind sowohl Homopolycarbonate als auch Copolycarbonate. Die Polycarbonate können in bekannter Weise linear oder verzweigt sein. Sofern im Rahmen der vorliegenden Erfindung von "Polycarbonaten" gesprochen wird, sind stets aromatische Polycarbonate gemeint, auch, wenn nicht explizit erwähnt.

Die Herstellung der Polycarbonate erfolgt in bekannter Weise aus Dihydroxyarylverbindungen, Kohlensäurederivaten, gegebenenfalls Kettenabbrechern und Verzweigern.

Einzelheiten der Herstellung von Polycarbonaten sind in vielen Patentschriften seit etwa 40 Jahren niedergelegt. Beispielhaft sei hier auf Schnell, "Chemistry and Physics of Polycarbonates", Polymer Reviews, Volume 9, Interscience Publishers, New York, London, Sydney 1964, auf D. Freitag, U. Grigo, P.R. Müller, H. Nouvertné, BAYER AG, "Polycarbonates" in Encyclopedia of Polymer Science and Engineering, Volume 11, Second Edition, 1988, Seiten 648-718 und schließlich auf Dres. U. Grigo, K. Kirchner und P.R. Müller "Polycarbonate" in Becker/Braun, Kunststoff-Handbuch, Band 3/1, Polycarbonate, Polyacetale, Polyester, Celluloseester, Carl Hanser Verlag München, Wien 1992, Seiten 117-299 verwiesen.

Für die Herstellung der Polycarbonate geeignete Dihydroxyarylverbindungen sind beispielsweise Hydrochinon, Resorcin, Dihydroxydiphenyle, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha - alpha '-Bis-(hydroxyphenyl)-diisopropylbenzole, Phtalimidine abgeleitet von Isatin- oder Phenolphthaleinderivaten sowie deren kernalkylierte, kernarylierte und kernhalogenierte Verbindungen.

Bevorzugte Dihydroxyarylverbindungen sind 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-phenylethan, 1,3-Bis-[2-(4-hydroxyphenyl)-2-propyl]benzol (Bisphenol M), 1,1-Bis-(4-hydroxyphenyl)-p-diisopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-p-diisopropylbenzol, 2,2-Bis-(3,5-dichlor-4-hydroxyphenyl)-propan, 2,2-Bis-(3,5-dibrom-4-hydroxyphenyl)-propan, 1,3-Bis-[2-(3,5-dimethyl-4-hydroxyphenyl)-2-propyl]-benzol und 1,1-Bis-(4-hydroxyphenyl)-3,3,5-trimethylcyclohexan (Bisphenol TMC) sowie die Bisphenole der Formeln (I) bis (III) 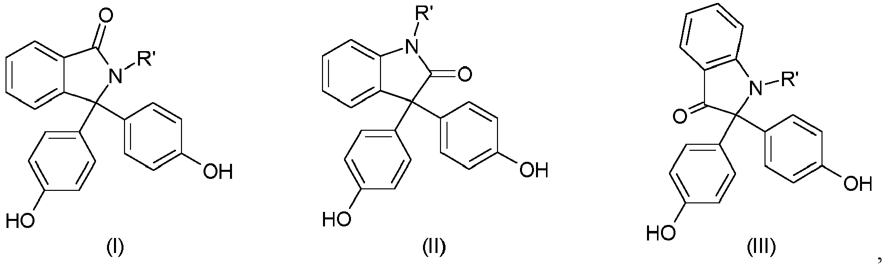 in denen R' jeweils für einen C₁- bis C₄-Alkylrest, Aralkylrest oder Arylrest, bevorzugt für einen Methylrest oder Phenylrest, ganz besonders bevorzugt für einen Methylrest, steht.

Besonders bevorzugte Dihydroxyarylverbindungen sind 4,4'-Dihydroxydiphenyl, 1,1-Bis-(4-hydroxyphenyl)-phenyl-ethan, 2,2-Bis-(4-hydroxyphenyl)-propan, 2,2-Bis-(3,5-dibrom-4-hydroxyphenyl)-propan, 2,2-Bis-(3,5-dichlor-4-hydroxyphenyl)-propan, 2,2-Bis(3,5-dimethyl-4-hydroxyphenyl)-propan, 1,1-Bis-(4-hydroxyphenyl)-cyclohexan und 1,1-Bis-(4-hydroxyphenyl)-3,3,5-trimethylcyclohexan (Bisphenol TMC) sowie die Dihydroxyarylverbindungen der Formeln (I), (II) und/oder (III).

Diese und weitere geeignete Dihydroxyarylverbindungen sind z.B. in US 2 999 835 A, 3 148 172 A, 2 991 273 A, 3 271 367 A, 4 982 014 A und 2 999 846 A, in den deutschen Offenlegungsschriften 1 570 703 A, 2 063 050 A, 2 036 052 A, 2 211 956 A und 3 832 396 A, der französischen Patentschrift 1 561 518 A1, in der Monographie "H. Schnell, Chemistry and Physics of Polycarbonates, Interscience Publishers, New York 1964, S. 28 ff.; S.102 ff." sowie in "D.G. Legrand, J.T. Bendler, Handbook of Polycarbonate Science and Technology, Marcel Dekker New York 2000, S. 72ff." beschrieben.

Im Fall der Homopolycarbonate ist nur eine Dihydroxyarylverbindung eingesetzt, im Fall der Copolycarbonate sind mehrere Dihydroxyarylverbindungen eingesetzt.

Geeignete Kohlensäurederivate sind beispielsweise Phosgen oder Diphenylcarbonat.

Geeignete Kettenabbrecher, die bei der Herstellung der Polycarbonate eingesetzt werden können, sind sowohl Monophenole als auch Monocarbonsäuren. Geeignete Monophenole sind beispielsweise Phenol selbst, Alkylphenole wie Kresole, p-tert.-Butylphenol, Cumylphenol, p-n-Octylphenol, p-iso-Octylphenol, p-n-Nonylphenol und p-iso-Nonylphenol, Halogenphenole wie p-Chlorphenol, 2,4-Dichlorphenol, p-Bromphenol und 2,4,6-Tribromphenol, 2,4,6-Triiodphenol, p-Jodphenol, sowie deren Mischungen.

Bevorzugte Kettenabbrecher sind ferner die Phenole, welche ein- oder mehrfach mit C₁- bis C₃₀-Alkylresten, linear oder verzweigt, bevorzugt unsubstituiert oder mit tert.-Butyl substituiert sind. Besonders bevorzugte Kettenabbrecher sind Phenol, Cumylphenol und/oder p-tert.-Butylphenol.

Geeignete Monocarbonsäuren sind weiterhin Benzoesäure, Alkylbenzoesäuren und Halogenbenzoesäuren.

Die Menge an einzusetzendem Kettenabbrecher beträgt bevorzugt 0,1 bis 5 Mol%, bezogen auf Mole an jeweils eingesetzten Dihydroxyarylverbindungen. Die Zugabe der Kettenabbrecher kann vor, während oder nach der Umsetzung mit einem Kohlesäurederivat erfolgen.

Geeignete Verzweiger sind die in der Polycarbonatchemie bekannten tri- oder mehr als trifunktionellen Verbindungen, insbesondere solche mit drei oder mehr als drei phenolischen OH-Gruppen.

Geeignete Verzweiger sind beispielsweise Phloroglucin, 4,6-Dimethyl-2,4,6-tri-(4-hydroxyphenyl)-hepten-2, 4,6-Dimethyl-2,4,6-tri(4-hydroxyphenyl)-heptan, 1,3,5-Tri(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenylisopropyl)-phenol, 2,6-Bis-(2-hydroxy-5'-methyl-benzyl)-4-methylphenol, 2-(4-hydroxyphenyl)-2-(2,4-dihydroxyphenyl)-propan, Hexa-(4(4-hydroxyphenylisopropyl)-phenyl)-orthoterephthalsäureester, Tetra-(4-hydroxyphenyl)-methan, Tetra-(4-(4-hydroxyphenylisopropyl)-phenoxy)-methan und 1,4-Bis-((4',4"-dihydroxytriphenyl)-methyl)-benzol sowie 2,4-Dihydroxybenzoesäure, Trimesinsäure, Cyanurchlorid und 3,3-Bis-(3-methyl-4-hydroxyphenyl)-2-oxo-2,3-dihydroindol.

Die Menge der gegebenenfalls einzusetzenden Verzweiger beträgt bevorzugt 0,05 Mol-% bis 2,00 Mol%, bezogen wiederum auf Mole an jeweils eingesetzten Dihydroxyarylverbindungen.

Die Verzweiger können entweder mit den Dihydroxyarylverbindungen und den Kettenabbrechern in der wässrig alkalischen Phase vorgelegt werden oder in einem organischen Lösungsmittel gelöst vor der Phosgenierung zugegeben werden. Im Fall des Umesterungsverfahrens werden die Verzweiger zusammen mit den Dihydroxyarylverbindungen eingesetzt. Die in den erfindungsgemäßen Zusammensetzungen enthaltenen aromatischen Polycarbonate sind bevorzugt nach dem Grenzflächenverfahren hergestellt.

Bevorzugt werden lineare Polycarbonate eingesetzt.

Die aromatischen Polycarbonate der vorliegenden Erfindung besitzen bevorzugt gewichtsmittlere Molekulargewichte M_{w} zwischen 10.000 und 50.000 g/mol, weiter bevorzugt zwischen 14.000 und 40.000 g/mol, noch weiter bevorzugt zwischen 15.000 und 35.000 g/mol, besonders bevorzugt zwischen 18.000 - 32.000 g/mol, ganz besonders bevorzugt zwischen 20.000 und 28.000 g/mol. Die Werte gelten für die Ermittlung durch Gelpermeationschromotographie, unter Verwendung von Dichlormethan als Elutionsmittel, Kalibrierung mit linearen Polycarbonaten (aus Bisphenol A und Phosgen) bekannter Molmassenverteilung der PSS Polymer Standards Service GmbH, Deutschland, Kalibrierung nach der Methode 2301-0257502-09D (aus dem Jahre 2009 in deutscher Sprache) der Currenta GmbH & Co. OHG, Leverkusen. Das Elutionsmittel ist auch beim Kalibrieren Dichlormethan. Säulenkombination aus vernetzten Styrol-Divinylbenzolharzen. Durchmesser der analytischen Säulen: 7,5 mm; Länge: 300 mm. Partikelgrößen des Säulenmaterials: 3 µm bis 20 µm. Konzentration der Lösungen: 0,2 Gew.-%. Flussrate: 1,0 ml/min, Temperatur der Lösungen: 30°C. Detektion mit Hilfe eines Brechungsindex(RI)-Detektors.

Der MVR-Wert des aromatisches Polycarbonats, gemessen nach ISO 1133:2012-03 bei 300 °C und 1,2 kg, beträgt bevorzugt 5 bis 35 cm³/(10 min), weiter bevorzugt 10 bis 20 cm³/(10 min).

Die Mw- und MVR-Angaben beziehen sich auf die in der Zusammensetzung enthaltenen aromatischen Polycarbonate in ihrer Gesamtheit.

Besonders bevorzugte Polycarbonate sind das Homopolycarbonat auf Basis von Bisphenol A, das Homopolycarbonat auf Basis von 1,3-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5 -trimethylcyclohexan.

"Basiert auf bedeutet, dass vorzugsweise mindestens 60 Gew.-%, weiter bevorzugt mindestens 70 Gew.-%, noch weiter bevorzugt mindestens 80 Gew.-% der Gesamtzusammensetzung des thermoplastischen Materials das entsprechende Polymer sind. Das thermoplastische Material umfasst neben einen oder mehreren der genannten Polymere bevorzugt weitere übliche Additive. Solche sind z.B. Flammschutzmittel, Antistatika, UV-Absorber, Stabilisatoren, Antioxidantien und Entformungsmittel. Geeignete Ultraviolett-Absorber sind Benzotriazole, Triazine, Benzophenone und/oder arylierte Cyanoacrylate. Als Stabilisatoren bevorzugt sind Phosphite und Phosphonite sowie Phosphine. Ferner können Alkylphosphate z. B. Mono-, Di- und Trihexylphosphat, Triisoctylphosphat und Trinonylphosphat eingesetzt werden. Als Antioxidantien können phenolische Antioxidantien wie alkylierte Monophenole, alkylierte Thioalkylphenole, Hydrochinone und alkylierte Hydrochinone eingesetzt werden. Geeignete Entformungsmittel sind zum Beispiel solche auf Basis eines Fettsäureesters, bevorzugt eines Stearinsäureesters, insbesondere bevorzugt auf Pentaerythritbasis. Bevorzugt werden Pentaerythrittetrastearat (PETS) und/oder Glycerinmonostearat (GMS) eingesetzt.

Besonders bevorzugt enthält die Zusammensetzung weniger als 0,1 Gew.-%, ganz besonders bevorzugt ist die Zusammensetzung frei von Streuadditiven, z.B. solchen auf Basis von Acrylat, Polyethylen, Polypropylen, Polystyrol, Glas, Aluminiumoxid und/oder Siliciumdioxid. Ferner enthält die Zusammensetzung besonders bevorzugt weniger als 0,1 Gew.-%, ganz besonders bevorzugt ist sie frei von Weißpigmenten o.ä. Pigmenten wie z.B. Titandioxid, Kaolin, Bariumsulfat, Zinksulfid, Aluminiumoxid, Aluminiumhydroxid, Quarzmehl, von Interferenzpigmenten und/oder Perlglanzpigmenten, d.h. plättchenförmigen Partikeln wie Glimmer, Graphit, Talk, SiO2, Kreide und/oder Titandioxid, beschichtet und/oder unbeschichtet.

Ferner enthält die Zusammensetzung besonders bevorzugt weniger als 0,1 Gew.-%, ganz besonders bevorzugt ist die Zusammensetzung frei von nanopartikulären Systemen wie Metallpartikeln, Metalloxidpartikeln. Bevorzugt enthält die Zusammensetzung auch weniger als 0,1 Gew.-%, besonders bevorzugt ist sie frei von Pigmenten auf Basis von unlöslichen Pigmenten, wie sie z.B. in DE 10057165 A1 und in WO 2007/135032 A2 beschrieben sind.

Das transparente Material kann mit Farbmitteln versetzt sein, um den Farbeindruck zu ändern. Bevorzugt ist das thermoplastische Material transparent eingefärbt, besonders bevorzugt transparent neutral-grau eingefärbt. Dieses hat den Vorteil, dass der Farbraum der hinter der transparenten Schicht liegenden Lichtquelle, welche Informationen transportiert und beispielsweise ein Display sein kann, erhalten bleibt. Solche neutral-grau eingefärbten Zusammensetzungen sind beispielsweise in der EP 2 652 029 A2 beschrieben, welche ein bevorzugtes Material für die transparente thermoplastische Schicht beschreibt. Entsprechende Polycarbonat-Zusammensetzungen enthalten ein Farbmittel oder eine Farbmittelkombination der Strukturen ausgewählt aus:
I. (1a) und/oder (1b) und (4) und (2a) und/oder (2b),
II. (1a) und/oder (1b) und (5) und (2a) und/oder(2b),
III. (1a) und/oder (1b) und (7),
IV. (1a) und/oder (1b) und (4) und (7),
V. (1a) und/oder (1b) und (5) und (7),
VI. (4) und (2a) und/oder (2b),
VII. (5) und (2a) und/oder (2b),
VIII. (2a) und/oder(2b) und (4) und (6),
IX. (2a) und/oder(2b) und (5) und (6),
X. (3) und (4),
XI. (3) und (5),
XII. (3) und (4) und (6),
XIII. (3) und (5) und (6),
XIV. (3) und (4) und (7),
XV. (3) und (5) und (7),
XVI. (3) und (4) und (2a) und/oder(2b),
XVII. (3) und (5) und (2a) und/oder(2b),
XVIII. (6) und (1a) und/oder (1b),
XIX. (6) und (1a) und/oder (1b) und (7),
XX. (1a) und/oder (1b) und (8),
XXI. (7) und (4),
XXII. (7) und (5),
XXIII. (1a) und/oder (1b),
XXIV. (2a) und/oder (2b),
XXV. (7),
XXVI. (2a) und/oder (2b) und (7),
wobei die Strukturen wie folgt sind: 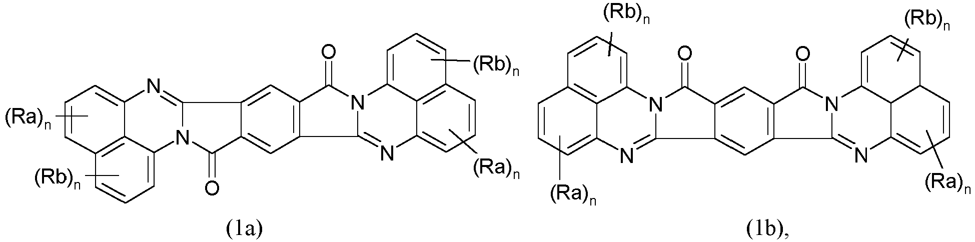 wobei
- Ra und Rb unabhängig voneinander für einen linearen oder verzweigten Alkylrest oder Halogen stehen;
- n unabhängig vom jeweiligen R für eine natürliche Zahl zwischen 0 und 3 steht, wobei der Rest für n = 0 Wasserstoff ist; 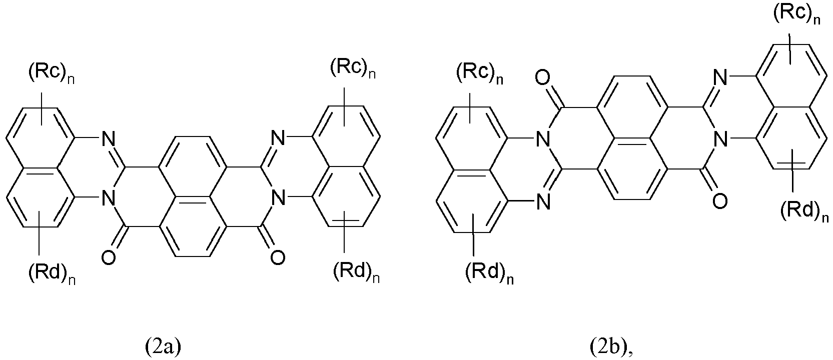
wobei
- Rc und Rd unabhängig voneinander für einen linearen oder verzweigten Alkylrest oder Halogen stehen;
- n unabhängig vom jeweiligen R für eine natürliche Zahl zwischen 0 und 3 steht, wobei der Rest für n = 0 Wasserstoff ist; 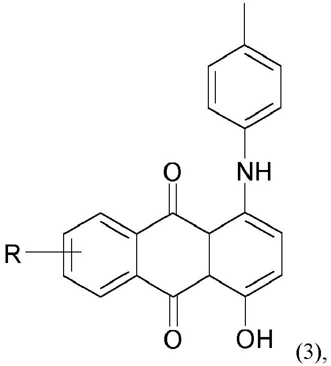
wobei
R ausgewählt ist aus der Gruppe, die aus H und p-Methylphenlyamin-Rest besteht; 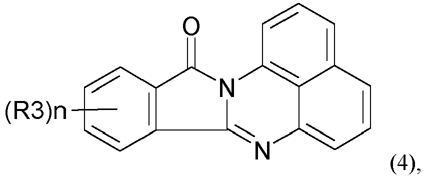 wobei
R3 Halogen ist;
n = 4 ist; 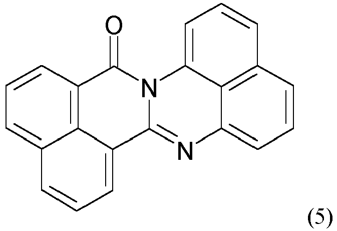 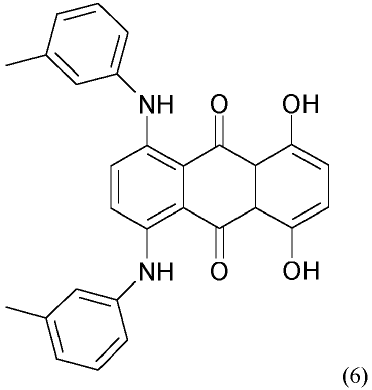 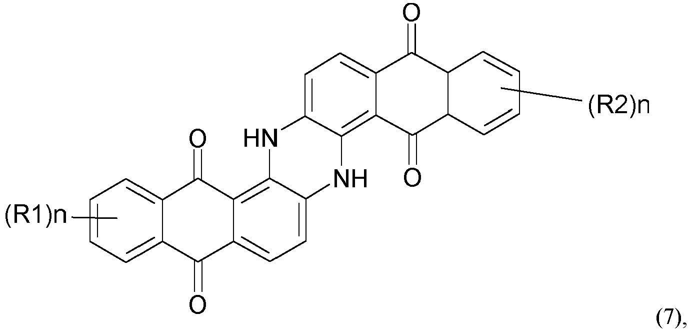
wobei
- R1 und R2 unabhängig voneinander für einen linearen oder verzweigten Alkylrest oder Halogen stehen;
- n für eine natürliche Zahl zwischen 0 und 4 steht; 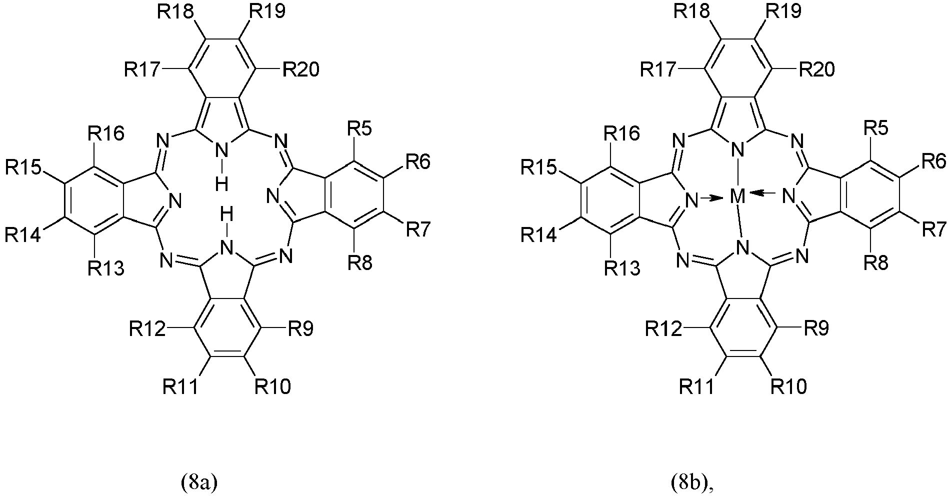
wobei
- die Reste R(5-20) jeweils unabhängig voneinander Wasserstoff, Methyl, Ethyl, Propyl, Isopropyl, Butyl, Isobutyl, tert.-Butyl, Pentyl, Neopentyl, Hexyl, Thexyl, Fluor, Chlor, Brom, Sulfon oder CN sind und
- M ausgewählt ist aus der Gruppe, die aus Aluminium, Nickel, Cobalt, Eisen, Zink, Kupfer und Mangan besteht,
wobei die Farbmittel der Strukturen (1a), (1b), (2a), (2b), (3) und die Farbmittel der Strukturen (4), (5), (6), (7), (8a/b) in der thermoplastischen Polymer-Zusammensetzung, bezogen auf die jeweilige Einzelkomponente, in Mengen von 0,000001 Gew.-% bis 1,000000 Gew.-%, bezogen auf die Gesamtpolymerzusammensetzung, verwendet werden.

Die transparente Schicht wird bevorzugt mittels Spritzgussverfahren hergestellt. Auch Thermoformen ist grundsätzlich denkbar.

Die Dicke der transparenten Schicht liegt bevorzugt im Bereich zwischen 2 und 8 mm, besonders bevorzugt zwischen 2,5 und 6 mm, ganz besonders bevorzugt zwischen 3 und 4 mm.

Die transparente thermoplastische Schicht weist eine 3-dimensional strukturierte Oberfläche auf. Unter die Bezeichnung "3-dimensional strukturierte Oberfläche" fallen Musterungen, Texturen und Narbungen, die eine gezielt in die Oberfläche eingebrachte, räumliche Anordnung und Verteilung einzelner Strukturelemente aufweisen, aus denen für einen Betrachter ein visueller Eindruck eines Optikdesigns entsteht. Dazu sind Strukturelemente enthalten, deren laterale Ausdehnung Dimensionen von bevorzugt mindestens 1 mm, weiter bevorzugt größer als 3 mm, besonders bevorzugt größer als 5 mm aufweisen. Außerdem weisen die Flächennormalen dieser Strukturelemente bevorzugt eine Winkelabweichung von > 0,5°, bevorzugt von > 2,5°, besonders bevorzugt > 10°, bezogen auf die Flächennormalen der angrenzenden Strukturelemente auf. Darüber hinaus liegt die Höhe der 3-dimensionalen Strukturelemente bevorzugt im Bereich von 0,1 bis 4 mm, bevorzugt im Bereich von 0,2 bis 1,5 mm, besonders bevorzugt im Bereich von 0,5 bis 1 mm. "Von"/"bis" schließt hierbei die genannte Unter- bzw. Obergrenze ein. Die Höhe der 3-dimensionalen Struktur bezeichnet hierbei die Differenz zwischen dem höchsten und dem tiefsten Punkt der Struktur, was bezogen auf den Bauteilquerschnitt die Differenz zwischen der minimalen und der maximalen Wanddicke entspricht. Die Oberfläche der 3-dimensional strukturierten Oberfläche weist bevorzugt mehrere gegeneinander unterscheidbare Flächen auf. Weiter bevorzugt sind es mindestens 2, noch weiter bevorzugt > 10 Flächen, besonders bevorzugt > 50 Flächen.

Die Struktur wird bevorzugt mittels Spritzprägen oder bereits im Spritzgussschritt in die Oberfläche eingebracht.

Auf der der Sichtseite gegenüberliegenden Seite der transparenten thermoplastischen Schicht, also der Seite mit der 3-dimensional strukturierten Oberfläche, ist eine Metallschicht aufgebracht. Die Metallschicht folgt in ihrer dreidimensionalen Ausprägung üblicherweise der 3-dimensional strukturierten Oberfläche der transparenten thermoplastischen Schicht. Das Aufbringen der Metallschicht erfolgt bevorzugt durch Sputtertechnologie oder über überspritzte Metallicfolien, Transferfolien mit Metallic-Lack, oder Metallic-Sprühlacksysteme.

Die Metallschicht enthält bevorzugt mindestens eines der folgenden Metalle oder Halbmetalle: Y, Ti, Zr, V, Nb, Ta, Cr, Mo, W, Mn, Fe, Co, Pd, Pt, Cu, Ag, Au, Zn, B, Al, In, TI, Si, Ge, Sn, Pb, Sb, Bi. Es versteht sich, dass die Metallschicht auch eine Legierung oder eine Mischschicht dieser Elemente umfassen kann. Bevorzugt besteht die Metallschicht aus einem dieser Metalle/Halbmetalle/Übergangsmetalle und/oder einer Legierung und/oder Mischschicht dieser Elemente. Es versteht sich, dass die Metallschicht weiterhin übliche Verunreinigungen enthalten kann. Die Metallschicht ist eine einzelne Schicht oder eine Schichtenfolge mehrerer unterschiedlicher Metallschichten.

Im einfachsten Fall ist die Metallschicht vollreflexiv analog einer Spiegelschicht ausgeführt. Neben den einschlägigen Vakuumverfahren zur Aufbringung der Metallschichten, insbesondere Sputter-Verfahren, sind auch Methoden der Galvanisierung und der nasschemischen Abscheidung denkbar.

Die Verfahren sind näher beschrieben z.B. in "Vakuumbeschichtung Bd. 1 bis 5", H. Frey, VDI-Verlag, Düsseldorf, 1995 oder in "Oberflächen-und Dünnschicht-Technologie" Teil 1, R.A. Haefer, Springer, Verlag 1987.

Um eine bessere Metallhaftung zu erreichen und um die Substratoberfläche zu reinigen, kann die zu beschichtende Oberfläche einer Plasmavorbehandlung unterzogen werden. Eine Plasmavorbehandlung kann u. U. die Oberflächeneigenschaften von Polymeren verändern. Diese Methoden sind z.B. bei Friedrich et al. in "Metallized plastics 5 & 6: Fundamental and applied aspects" und in H. Grünwald et al. "Surface and Coatings Technology, 111 (1999), 287-296" beschrieben.

Die gemeinsame Transmission Ty der Metallschicht zusammen mit der transparenten Schicht beträgt mindestens 3,0%, weiter bevorzugt mindestens 7,5%, noch weiter bevorzugt mindestens 10%, besonders bevorzugt mindestens 14%, bestimmt nach DIN ISO 13468-2:2006 (D65, 10°).

Auf die Metallschicht ist bevorzugt auf der zur Diffusorschicht hin orientierten Seite eine Schutzschicht aufgebracht. Mit der Schutzschicht, die sich aus einer oder mehreren Einzelschichten zusammensetzen kann, sind Schutzschichten gemeint, die die Metallschicht vor äußeren Einflüssen schützen, d.h. vor Korrosion schützen oder auch vor anderen äußeren Einflüssen. Derartige Schutzschichten können in einem PECVD-Prozess (plasma enhanced chemical vapour deposition) oder Plasmapolymerisationsprozess aufgebracht werden. Hierbei werden niedrigsiedende Precursor, insbesondere solche auf Siloxan-Basis, in ein Plasma verdampft und dadurch aktiviert, so dass sie einen Film bilden können. Typische Substanzen hierbei sind Hexamethyldisiloxan (HMDSO), Tetramethyldisiloxan, Decamethylcyclopentasiloxan, Octamethylcyclotetrasiloxan und Trimethoximethylsilan, wobei Hexamethyldisiloxan besonders bevorzugt ist. Ganz besonders bevorzugt ist für Schicht eine Schicht, enthaltend Hexamethyldisiloxan (HMDSO).

Die Dicke der Schutzschicht insgesamt beträgt dabei maximal 100 nm, weiter bevorzugt weniger als 100 nm und besonders bevorzugt weniger als 50 nm, ganz besonders bevorzugt weniger als 35 nm.

In einer Ausführungsform kann die Schutzschicht aus einer elektrisch leitfähigen Schicht, z.B. aus einer Indium-Zinnoxid (ITO)-haltigen-Schicht, gebildet werden. Insbesondere bevorzugt enthält dabei die Schicht mehr als 50 Gew.-% ITO. Ferner kommen leitfähige Schichten aus Zinksulfid, Silberchlorid, Zinkselenid und Cadmiumtelurid in Frage. In dieser besonderen Ausführungsform kann die Schichtdicke bis zu 5 µm betragen.

Bevorzugt sind mindestens 50 % der Rückseite der transparenten thermoplastischen Schicht mit Metall bedeckt, weiter bevorzugt mindestens 75%, ganz besonders bevorzugt die gesamte Rückseite, also die der Sichtseite abgewandte Seite.

Durch die Metallschicht ergibt sich ein metallischer Glanz, der auch auf der Sichtseite der transparenten thermoplastischen Schicht, durch diese hindurch, erkennbar ist. Dieser entsteht durch sichtbare Reflexion von Tageslicht, wobei die totale Reflexion mindestens 10 %, bestimmt nach ASTM E 1331:2015, beträgt. Die Oberfläche der Metallschicht kann sowohl spiegelnd als auch matt glänzend sein.

In einer Ausführungsform bewirkt die Metallschicht auch Farbeffekte bzw. farbige Lichtspiele, indem sie ambientes Licht oder auftreffendes Weißlicht farbig reflektiert. Bevorzugt werden solche Effekte durch eine eingefärbte transparente thermoplastische Schicht erreicht. Dieses kann die bereits beschriebene transparente thermoplastische Schicht sein oder eine mit dieser verbundene Schicht.

Die Art und Dicke der Metallschicht, bei mehreren einzelnen Metallschichten der Summe aller Metallschichten, sind so zu wählen, dass die Metallschicht eine visuelle Transmission Ty (D65, 10°) gemäß DIN ISO 13468-2:2006 von ≥ 4%, bevorzugt ≥ 8%, weiter bevorzugt ≥ 10%, besonders bevorzugt ≥ 15%, ganz besonders bevorzugt ≥ 25% aufweist. Auf diese Weise wird sichergestellt, dass die von der Lichtquelle ausgestrahlten Informationen nicht nur durch die Diffusorschicht, sondern auch durch die Metallschicht und dann durch die transparente Schicht gelangen. Die Metallschicht ist also aufgrund dieser Transparenz über das emittierte Farbspektrum der Licht-/Bildquelle hinweg durchleuchtbar.

Die Diffusorschicht ist in einem Abstand von ≤ 5 mm, bevorzugt von < 2 mm zur Metallschicht angeordnet. Dieses umfasst, dass sich die Diffusorschicht auch unmittelbar an die Metallschicht anschließen kann. Ein größerer Abstand der Diffusorschicht ist, obwohl prinzipiell möglich, nicht favorisiert, da sonst ein Verlust an Helligkeit, Bildschärfe und Blickwinkel auftreten.

Bei der Diffusorschicht handelt es sich um ein Weißlicht-streuende Schicht, die bevorzugt Licht in einem Wellenlängenbereich mindestens von 450 bis 670 nm, weiter bevorzugt von 400 bis 780 nm, streut.

Als Diffusorschicht kommen grundsätzlich verschiedene Typen in Frage. Dieses sind Oberflächendiffusoren, Volumendiffusoren oder holographische Diffusoren.

Die Diffusorschicht kann eine Folie oder ein Lack sein.

Die Dicke der aktiv streuenden Schicht im Diffusor beträgt bevorzugt < 2 mm, weiter bevorzugt < 1 mm, noch weiter bevorzugt < 650 µm, besonders bevorzugt ≤ 500 µm, ganz besonders bevorzugt < 100 µm.

Die Diffusorschicht weist mindestens eine Transmission von > 50%, bevorzugt > 75 %, weiter bevorzugt > 80%, besonders bevorzugt > 85 %, bestimmt nach DIN ISO 13468-2:2006 auf.

Außerdem weist die Diffusorschicht einen Halbwertswinkel von 10° bis 50°, bevorzugt von 15 bis 30°, weiter bevorzugt von 18 bis 25°, gemessen nach DIN 5036:1978 (bezogen auf die Lichtintensität), auf.

Die Diffusorschicht kann isotrop streuen oder anisotrop. Eine anisotrop streuende Diffusorschicht ist dadurch gekennzeichnet, dass die größere Streubreite, gemessen am Halbwertswinkel, in der horizontalen Parallaxe liegt und die kleinere in der vertikalen.

Grundsätzlich ist jede Diffusorschicht als Diffusorschicht im erfindungsgemäßen Aufbau geeignet, sofern sie eine Transmission Ty von mindestens > 50 %, bestimmt nach DIN ISO 13468-2:2006 (D65, 10°) sowie einen Halbwertswinkel von 10° ≤ x ≤ 50°, bestimmt nach DIN 5036:1978 (bezogen auf die Lichtintensität), aufweist.

Die Fläche der Diffusorschicht entspricht der maximalen Bildfläche der Leuchteinheit.

Der Mehrschichtkörper der Leuchteinheit, umfassend die transparente thermoplastische Schicht mit 3-dimensional strukturierter Oberfläche, die Metallschicht und die Diffusorschicht, die eine unmittelbare oder auf die Funktion gerichtete Verbindung zum Mehrschichtkörper aufweist, kann mit weiteren Schichten, insbesondere Schutz- und/oder Verbindungsschichten, ausgestattet werden. Bevorzugt weist die transparente thermoplastische Schicht, insbesondere basierend auf aromatischem Polycarbonat, eine Schutzschicht auf, insbesondere eine Kratzfestbeschichtung, welche auf der Sichtseite der Leuchteinheit liegt. Alternativ oder weiter bevorzugt zu dieser Schutzschicht weist die Diffusorschicht auf der der Lichtquelle zugewandten Seite eine Schutzschicht auf.

Noch weiter bevorzugt sind keine weiteren Schichten vorhanden.

Die Lichtquelle ist vorzugsweise eine LED-Lichtquelle. Als "LED-Lichtquelle" wird im Sinne der vorliegenden Erfindung eine Lichtquelle verstanden, die Licht aussendet, das eine Strahlungscharakteristik aufweist, bei der mehr als 70% der im Bereich von 200 nm bis 3000 nm abgegebenen Intensität im sichtbaren Bereich des Spektrums liegt. Im Sinne der vorliegenden Erfindung ist der sichtbare Bereich definiert als der Wellenlängenbereich von 360 nm bis 780 nm. Insbesondere bevorzugt liegen weniger als 5% der Intensität im Bereich < 360 nm. Bei Betrachtung des Bereichs von 360 nm bis 500 nm weist das LED-Licht im Rahmen der vorliegenden Erfindung eine Peakwellenlänge hinsichtlich seiner Intensität - also Wellenlänge der maximalen Intensitätvon 360 nm bis 460 nm auf, weiter bevorzugt von 400 nm bis 460 nm, und besonders bevorzugt von 430 nm bis 460 nm, alternativ besonders bevorzugt von 400 nm bis 405 nm, auf. Zur Ermittlung der Peakwellenlänge wird eine strahlungsäquivalente Größe wie z.B. der Strahlungsfluss, spektral aufgelöst gemessen und in einem kartesischen Koordinatensystem dargestellt. Auf der y-Achse wird die strahlungsäquivalente Größe aufgetragen und auf der x-Achse die Wellenlängen. Das absolute Maximum dieser Kurve ist die "Peakwellenlänge" (Definition nach DIN 5031-1 (1982)). "Von...bis"... schließt hierbei die genannten Grenzwerte ein. Dabei hat das "LED-Licht" bevorzugt eine enge Emissionsbreite mit einer Halbwertsbreite von maximal 60 nm, weiter bevorzugt von maximal 45 nm, noch weiter bevorzugt von max. 30 nm, wobei monochromatisches Licht besonders bevorzugt ist. Hierbei ist die Halbwertsbreite die volle Breite eines Emissionspeaks bei halber Höhe der Intensität.

Solche Emissionscharakteristika werden unter anderem durch die Verwendung von Halbleitern oder Lasern als Lichtquelle erreicht. Die Halbleitertechnologie wird heute bereits häufig eingesetzt, beispielsweise in LEDs (light emitting diodes), organischen LEDs (OLEDs) und elektrolumineszierenden Folien.

Bei der Lichtquelle, welche Informationen transportiert, handelt es sich um eine Projektionseinheit. "Informationen transportieren können" bedeutet erfindungsgemäß, dass durch die Lichtquelle beispielsweise bewegte Bilder ausgeworfen werden können. Eine geeignete Projektionseinheit ist beispielsweise ein LED-Mikrobeamer, bevorzugt ein Near-Edge Projektor (Kurzdistanzbeamer), insbesondere einer mit auf die Geometrie des Bauteils angepasster Optik, oder um einen Flachbildschirm, z.B. ein solcher des Typs LCD oder Organic LED oder Micro LED. Bevorzugt hat der Flachbildschirm keinen eigenen Diffusor vor seinem Panel, sondern nutzt das Diffusorelement des Mehrschichtkörpers der Leuchteinheit.

Die Lichtquelle ist nicht zwingend mechanisch mit den weiteren Elementen der Leuchteinheit direkt verbunden. Sie kann mit den weiteren Elementen auch lediglich funktionell zu einer Einheit verbunden sein. Ebenso kann es sich aber um eine mechanisch verbundene Kombination handeln.

Das Sichtfeld der erfindungsgemäßen Leuchteinheit liegt bevorzugt im Bereich von -90° bis +90°, bevorzugt -70° bis +70°, insbesondere -60° bis +60° (jeweils horizontal). Sofern eine Erweiterung des Sichtfeldes gewünscht ist, kann eine solche erzielt werden, indem die transparente thermoplastische Schicht auf der Sichtseite eine konvexe Krümmung aufweist.

Erfindungsgemäße Leuchteinheiten finden bevorzugt Verwendung in der Car-to-X-Kommunikation im aktiven Zustand und als passives Designelement im ausgeschalteten Zustand (Lichtquelle ausgeschaltet). Durch die rückseitige, 3-dimensionale Oberflächenstruktur und aufgebrachte Metallisierung wirkt das Bauteil, welches bevorzugt im Automobil-Exterieurbereich eingesetzt wird, sehr wertig. Mögliche Anwendungen sind z.B. Frontpanels, Seitenverkleidungen, Heckspoiler oder Heckklappen. Im aktiven Zustand, d.h. mit rückseitiger Projektion, können zum einen licht- und designtechnische Effekte erzeugt werden, die im Einklang mit der 3-dimensionalen Struktur das Bauteil noch wertiger und eleganter erscheinen lassen. Dies kann zum Beispiel als Welcome-Funktion genutzt werden. Zum anderen kann die gesamte Oberfläche des Bauteils aber auch als Display zur Car-to-X-Kommunikation verwendet werden. Dies ist insbesondere bei autonom fahrenden Fahrzeugen wichtig. Befindet sich die erfindungsgemäße Leuchteinheit im Frontmodul eines Fahrzeugs, kann dem Fußgänger beispielsweise angezeigt werden, dass er den Zebrastreifen überqueren darf und das Fahrzeug wartet. Befindet sich die erfindungsgemäße Leuchteinheit im Heckbereich eines Fahrzeugs, können die nachfolgenden Verkehrsteilnehmer frühzeitig auf Gefahrensituationen wie beispielsweise Staus oder Baustellen aufmerksam gemacht werden. Weitere Einsatzmöglichkeiten sind Statusanzeigen, wie z.B. der Ladestatus bei Elekrofahrzeugen, oder die Anzahl an freien Sitzplätzen bei autonom fahrenden Taxen. Erfindungsgemäße Leuchteinheiten lassen sich aber auch als dekorative und/oder informative Elemente von Gebäudefassaden, Schildern oder im Gebäudeinnenbereich einsetzen.

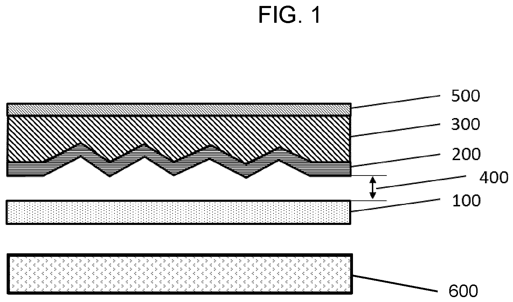

Im Folgenden wird die Erfindung anhand eines Ausführungsbeispiels unter Bezug auf die Figur 1 erläutert.
- Figur 1:: erfindungsgemäße Leuchteinheit

Figur 1 zeigt eine erfindungsgemäße Leuchteinheit mit einem Mehrschichtkörper und einer Lichtquelle (600), die Informationen vermittelt. Der Mehrschichtkörper umfasst eine transparente thermoplastische Schicht (300) mit einer Sichtseite und einer der Sichtseite gegenüberliegenden Rückseite. Auf die Sichtseite der transparenten thermoplastischen Schicht (300) ist eine Kratzfestbeschichtung (500) aufgebracht.

Auf der Rückseite der transparenten thermoplastischen Schicht (300) liegt eine 3-dimensionale Struktur. Unmittelbar auf die Rückseite der transparenten thermoplastischen Schicht (300) ist eine Metallschicht (200) aufgebracht, die den Erhebungen und Absenkungen der dreidimensionalen Struktur folgt. In einem Abstand zur Metallschicht (200), mit dazwischen liegendem Luftraum (400), ist eine Diffusorschicht (100) angeordnet. Hinter dieser befindet sich die Lichtquelle (600), ein Projektionselement.

### Beispiele

Die in Tabelle 1 beschrieben Beispiele wurden wir folgt hergestellt, vermessen und bewertet:
Für die Versuche wurde Spritzguss-Musterplatten mit rückseitiger dreidimensionaler Oberflächenstruktur und den Maßen 200 mm x 150 mm x 3 mm aus Polycarbonat-Zusammensetzungen herstellt. Um unterschiedliche Transmissionsgerade zu erhalten, wurden verschiedene Mischungsverhältnisse aus einem klar transparenten Polycarbonat (Makrolon^{®} AG2677 / 550396) und einem dunkel transparent eingefärbten Polycarbonat (Makrolon AG2677 / 18F123MA03) der Covestro Deutschland AG eingestellt. Der Anteil des dunkel eingefärbten Polycarbonats betrug dabei zwischen 5 und 75 Gew.-%. Anschließend wurden auf die Musterplatten im Vakuum mittels Sputterverfahren Aluminiumschichten mit verschiedenen Transmissionsgraden Ty (1 - 25%) aufgetragen. Die Transmissionen wurden zuvor auf Referenzproben (Glasplättchen) nach DIN ISO 13468-2:2006 (D65, 10°) bestimmt. Somit ergab sich für die verschiedenen Transmissionsgerade die entsprechende Dauer für den Sputterprozess.

Abschließend wurden die Transmissionen der Spritzguss-Musterplatten mit und ohne Metallisierungsschicht nach DIN ISO 13468-2:2006 (D65, 10°) gemessen und visuell bewertet (%-Werte in der Tabelle). Die Proben ohne Metallisierung dienen dabei lediglich als Referenz. Auf die metallisierten Platten wurde rückseitig direkt eine Diffusorfolie (Makrofol^{®} LM 309 der Covestro Deutschland AG mit einer Dicke von 300 µm, einer Transmission gemäß DIN ISO 13468-2:2006 (D65, 10°) von 86% und einem Halbwertswinkel von 20° gemäß DIN 5036:1978 (bezogen auf die Lichtintensität)) angebracht und diese von der Rückseite her, also der thermoplastischen, transparenten Schicht abgewandten Seite, mit einem Beamer mit 2000 Lumen Leuchtkraft angestrahlt. Die Vorderseite der Musterplatten wurde direktem Tageslicht ausgesetzt. Bewertet wurden anschließend insbesondere die Leuchtkraft und Farbbrillanz des durch die Musterplatten projizierten Bildes. Die visuelle Bewertung wurde in gut (++), ausreichend (+) und schlecht (--) eingeteilt. Die gut und ausreichend bewerteten Platten entsprechen der erfindungsgemäßen Ausführung. Die von dem Beamer transportierten Informationen waren in gut bis zufriedenstellend erkennbar.

**Tabelle 1**

| | **Metallschicht** | | | | |
|---|---|---|---|---|---|
| **Anteil des dunkel eingefärbten Polycarbonats an der Gesamtzusammensetzung** | nicht vorhanden | mit 25% Transmis sion | mit 15% Transmiss ion | mit 4% Transmiss ion | mit 1 % Transmis sion |
| 5 Gew.-% | 75,49 | 24,74 (++) | 14,24 (++) | 3,23(+) | n/a (-) |
| 10 Gew.-% | 64,98 | 20,38 (++) | 14,11 (++) | 2,58 (-) | 0,44 (-) |
| 20 Gew.-% | 51,48 | 18,83 (++) | 7,74 (+) | 1,81 (-) | n/a (-) |
| 30 Gew.-% | 43,51 | 15,00 (++) | 8,28(+) | 1,41 (-) | n/a (-) |
| 40 Gew.-% | 36,82 | 11,54 (++) | 6,61(+) | 1,15 (-) | 0,26 (-) |
| 50 Gew.-% | 30,73 | 11,19 (++) | 5,05(+) | 1,42 (-) | n/a (-) |
| 75 Gew.-% | 9,08 | 2,28 (-) | 1,82 (-) | 0,39 (-) | 0,06 (-) |

## Patentansprüche

1. Leuchteinheit, umfassend die folgenden Elemente in dieser Reihenfolge
- eine transparente, thermoplastische Schicht (300) mit einer Sichtseite und einer der Sichtseite abgewandten Seite,
wobei
die transparente Schicht (300) eine Transmission Ty von ≥ 10 %, bestimmt nach DIN ISO 13468-2:2006 (D65, 10°), aufweist und
eine 3-dimensional strukturierte Oberfläche auf der der Sichtseite abgewandten Seite aufweist,
- eine Metallschicht (200) direkt auf der transparenten Schicht (300) auf der der Sichtseite abgewandten Seite, wobei die Metallschicht (200) eine Transmission Ty von ≥ 4%, bestimmt nach DIN ISO 13468-2:2006 (D65, 10°), aufweist,
wobei die gemeinsame Transmission Ty der Metallschicht (200) mit der transparenten Schicht (300), bestimmt nach DIN ISO 13468-2:2006 (D65, 10°), mindestens 3,0 % beträgt,
- eine Diffusorschicht (100), welche einen Abstand von ≤ 5 mm zur Metallschicht aufweist und eine Transmission Ty von mindestens > 50 %, bestimmt nach DIN ISO 13468-2:2006 (D65, 10°), sowie einen Halbwertswinkel von 10° ≤< x ≤ 50°, bestimmt nach DIN 5036:1978 (bezogen auf die Lichtintensität), aufweist
- eine Lichtquelle (600), welche Informationen transportiert und einen Abstand zur Diffusorschicht von < 80 cm aufweist.

2. Leuchteinheit nach Anspruch 1, wobei die Metallschicht (200) auf die transparente Schicht (300) aufgedampft oder aufgetragen ist.

3. Leuchteinheit nach Anspruch 1 oder 2, wobei die Diffusorschicht (100) unmittelbar an der Metallschicht (200) angeordnet ist.

4. Leuchteinheit nach einem der vorhergehenden Ansprüche, wobei die Diffusorschicht (100) auf der Rückseite der Metallschicht (200) anliegt.

5. Leuchteinheit nach einem der vorhergehenden Ansprüche, wobei die Lichtquelle (600) ein Beamer ist.

6. Leuchteinheit nach einem der vorhergehenden Ansprüche, wobei die Transmission der Diffusorschicht (100) > 80 %, bestimmt nach DIN ISO 13468-2:2006, beträgt.

7. Leuchteinheit nach einem der vorhergehenden Ansprüche, wobei die 3-dimensional strukturierte Oberfläche Strukturelemente mit einer lateralen Ausdehnung von mindestens 1 mm aufweist, wobei die Flächennormalen dieser Strukturelemente eine Winkelabweichung von > 0,5°, bezogen auf die Flächennormalen der angrenzenden Strukturelemente, aufweisen und wobei die Höhe dieser Strukturelemente im Bereich von 0,1 bis 4 mm liegt.

8. Leuchteinheit nach Anspruch 7, wobei die Oberfläche der 3-dimensional strukturierten Oberfläche der transparenten, thermoplastischen Schicht (300) mehr als 10 gegeneinander unterscheidbare Flächen aufweist.

9. Leuchteinheit nach einem der vorhergehenden Ansprüche, wobei das Material der transparenten, thermoplastischen Schicht (300) auf aromatischem Polycarbonat basiert.

10. Leuchteinheit nach einem der vorhergehenden Ansprüche, wobei die transparente, thermoplastische Schicht (300) auf der Sichtseite der Leuchteinheit eine maximale Rauigkeit von < 0,1 µm, bestimmt nach DIN EN ISO 1302:2002-06, aufweist.

11. Leuchteinheit nach einem der vorhergehenden Ansprüche, wobei die Diffusorschicht (100) direkt auf die Metallschicht (200) aufgebracht ist.

12. Leuchteinheit nach einem der vorhergehenden Ansprüche, wobei die transparente, thermoplastische Schicht (300) neutral-grau eingefärbt ist.

13. Bauteil aus dem Automobil-Exterieurbereich, umfassend eine Leuchteinheit nach einem der vorhergehenden Ansprüche.

14. Bauteil nach Anspruch 14, wobei das Bauteil ein Frontpanel, eine Seitenverkleidung, ein Heckspoiler, eine Heckklappe oder ein Teilbereich dieser Elemente ist.

15. Bauteil nach Anspruch 13 oder 14, welches für die Car-to-X-Kommunikation ausgelegt ist.

## Claims

1. Lighting unit, comprising the following elements in this sequence
- a transparent thermoplastic layer (300) having a visible side and a side facing away from the visible side,
wherein
the transparent layer (300) has a transmittance Ty of ≥ 10%, determined in accordance with DIN ISO 13468-2:2006 (D65, 10°), and
has a 3-dimensionally structured surface on the side facing away from the visible side,
- a metal layer (200) directly on the transparent layer (300) on the side facing away from the visible side, wherein the metal layer (200) has a transmittance Ty of ≥ 4%, determined in accordance with DIN ISO 13468-2:2006 (D65, 10°),
wherein the combined transmittance Ty of the metal layer (200) with the transparent layer (300), determined in accordance with DIN ISO 13468-2:2006 (D65, 10°), is at least 3.0%,
- a diffuser layer (100), which is at a distance of ≤ 5 mm from the metal layer and has a transmittance Ty of at least > 50%, determined in accordance with DIN ISO 13468-2:2006 (D65, 10°), and a half-value angle of 10° ≤< x ≤ 50°, determined in accordance with DIN 5036:1978 (based on the light intensity),
- a light source (600), which conveys information and is at a distance from the diffuser layer of < 80 cm.

2. Lighting unit according to Claim 1, wherein the metal layer (200) is vapor-deposited or applied to the transparent layer (300).

3. Lighting unit according to Claim 1 or 2, wherein the diffuser layer (100) is arranged directly on the metal layer (200).

4. Lighting unit according to any of the preceding claims, wherein the diffuser layer (100) lies against the rear side of the metal layer (200).

5. Lighting unit according to any of the preceding claims, wherein the light source (600) is a projector.

6. Lighting unit according to any of the preceding claims, wherein the transmittance of the diffuser layer (100) is > 80%, determined in accordance with DIN ISO 13468-2:2006.

7. Lighting unit according to any of the preceding claims, wherein the 3-dimensionally structured surface has structural elements having a lateral extent of at least 1 mm, wherein the surface normals of these structural elements have an angular deviation of > 0.5°, based on the surface normals of the adjoining structural elements, and wherein the height of these structural elements is in the range from 0.1 to 4 mm.

8. Lighting unit according to Claim 7, wherein the surface of the 3-dimensionally structured surface of the transparent thermoplastic layer (300) has more than 10 mutually distinguishable faces.

9. Lighting unit according to any of the preceding claims, wherein the material of the transparent thermoplastic layer (300) is based on aromatic polycarbonate.

10. Lighting unit according to any of the preceding claims, wherein the transparent thermoplastic layer (300) on the visible side of the lighting unit has a maximum roughness of < 0.1 µm, determined in accordance with DIN EN ISO 1302:2002-06.

11. Lighting unit according to any of the preceding claims, wherein the diffuser layer (100) is applied directly to the metal layer (200).

12. Lighting unit according to any of the preceding claims, wherein the transparent thermoplastic layer (300) has a neutral-gray color.

13. Component from the automobile exterior region, comprising a lighting unit according to any of the preceding claims.

14. Component according to Claim 14, wherein the component is a front panel, a side panel, a rear spoiler, a tailgate or a subregion of these elements.

15. Component according to Claim 13 or 14, which is designed for car-to-X communication.

## Revendications

1. Unité d'éclairage, comprenant les éléments suivants, dans cet ordre,
- une couche transparente (300), thermoplastique, présentant une face visible et une face opposée à la face visible, la couche transparente (300) présentant une transmission Ty ≥ 10%, déterminée selon la norme DIN ISO 13468-2:2006 (D65, 10°) et présentant une surface structurée en 3 dimensions sur la face opposée à la face visible,
- une couche métallique (200) directement sur la couche transparente (300) sur la face opposée à la face visible, la couche métallique (200) présentant une transmission Ty ≥ 4%, déterminée selon la norme DIN ISO 13468-2:2006 (D65, 10°), la transmission Ty commune de la couche métallique (200) avec la couche transparente (300), déterminée selon la norme DIN ISO 13468-2:2006 (D65, 10°), étant d'au moins 3,0%,
- une couche de diffuseur (100), qui présente une distance ≤ 5 mm par rapport à la couche métallique et une transmission Ty au moins > 50%, déterminée selon la norme DIN ISO 13468-2:2006 (D65, 10°), ainsi qu'un angle de demi-valeur 10° ≤< x ≤ 50°, déterminé selon la norme DIN 5036:1978 (par rapport à l'intensité lumineuse),
- une source lumineuse (600), qui transporte des informations et qui présente une distance par rapport à la couche de diffuseur < 80 cm.

2. Unité d'éclairage selon la revendication 1, la couche métallique (200) étant déposée par vaporisation ou appliquée sur la couche transparente (300).

3. Unité d'éclairage selon la revendication 1 ou 2, la couche de diffuseur (100) étant agencée directement sur la couche métallique (200).

4. Unité d'éclairage selon l'une quelconque des revendications précédentes, la couche de diffuseur (100) se trouvant sur la face arrière de la couche métallique (200) .

5. Unité d'éclairage selon l'une quelconque des revendications précédentes, la source lumineuse (600) étant un projecteur.

6. Unité d'éclairage selon l'une quelconque des revendications précédentes, la transmission de la couche de diffuseur (100) étant > 80%, déterminée selon la norme DIN ISO 13468-2:2006.

7. Unité d'éclairage selon l'une quelconque des revendications précédentes, la surface structurée en 3 dimensions présentant des éléments de structure pourvus d'une extension latérale d'au moins 1 mm, la normale à la surface de ces éléments de structure présentant une déviation angulaire > 0,5°, par rapport à la normale à la surface des éléments de structure adjacents et la hauteur de ces éléments de structure étant située dans la plage de 0,1 à 4 mm.

8. Unité d'éclairage selon la revendication 7, la surface de la surface structurée en 3 dimensions de la couche transparente (300) thermoplastique présentant plus de 10 surfaces pouvant être distinguées les unes des autres.

9. Unité d'éclairage selon l'une quelconque des revendications précédentes, le matériau de la couche transparente (300) thermoplastique étant à base de polycarbonate aromatique.

10. Unité d'éclairage selon l'une quelconque des revendications précédentes, la couche transparente (300) thermoplastique présentant, sur la face visible de l'unité d'éclairage, une rugosité maximale < 0,1 µm, déterminée selon la norme DIN EN ISO 1302:2002-06.

11. Unité d'éclairage selon l'une quelconque des revendications précédentes, la couche de diffuseur (100) étant appliquée directement sur la couche métallique (200) .

12. Unité d'éclairage selon l'une quelconque des revendications précédentes, la couche transparente (300) thermoplastique présentant une couleur gris neutre.

13. Composant du domaine de l'extérieur d'automobiles, comprenant une unité d'éclairage selon l'une quelconque des revendications précédentes.

14. Composant selon la revendication 14, le composant étant un panneau avant, un habillage latéral, un béquet arrière, un hayon ou une zone partielle de ces éléments.

15. Composant selon la revendication 13 ou 14, conçu pour communication "Car-to-X".
